# EUROPÄISCHE PATENTSCHRIFT

(11) **EP 1 175 328 B1**
(45) Veröffentlichungstag und Bekanntmachung des Hinweises auf die Patenterteilung: **25.09.2002**
(21) Anmeldenummer: 01915200.8
(22) Anmeldetag: 07.02.2001
(51) Int. Cl.: B62D 21/04

(54) **FAHRSCHEMEL FÜR EIN KRAFTFAHRZEUG**
SUSPENSION SUB-FRAME FOR A MOTOR VEHICLE
FAUX-CHASSIS DE VEHICULE AUTOMOBILE

(30) Priorität: 01.03.2000 DE 10009926
(43) Veröffentlichungstag der Anmeldung: 30.01.2002
(73) Patentinhaber: Bayerische Motoren Werke Aktiengesellschaft, 80809 München (DE)
(72) Erfinder: KREMER, Horst, 82269 Geltendorf (DE); GUTMANN, Timo, 82433 Bad Kohlgrub (DE); WECKER, Anton, 85235 Odelzhausen (DE)
(86) Internationale Anmeldenummer: EP0101320
(87) Internationale Veröffentlichungsnummer: WO01064501

(56) Entgegenhaltungen:
- EP-A- 0 653 344
- WO-A-99/32346
- DE-A- 4 335 501
- DE-C- 448 406
- DE-C- 601 577
- DE-C- 767 675
- DE-C- 4 326 269
- FR-A- 1 158 530

## Beschreibung

Die Erfindung betrifft einen Fahrschemel für ein Kraftfahrzeug mit einem Frontmodul zur Aufnahme einer Fahrzeugvorderachse und einem Heckmodul zur Aufnahme einer Fahrzeughinterachse, nach dem Oberbegriff des Anspruchs 1. In der FR-A-1158530 ist ein solcher Fahrschemel offenbart, mit zusätzlichen Querträgern zum Abstützen der Karosserie.

Fahrschemel sowohl für die Vorder- als auch für die Hinterachse eines Fahrzeugs sind beispielsweise in Form von Perimeter-Rahmen (US 5,988,734) bekannt. Derartige Fahrwerkskonzepte sind für große Serienprodukte bestimmt. Sie sind nicht geeignet für in Kleinserien herzustellende Fahrzeuge, insbesondere Nischenfahrzeuge. Um Fahrzeugkonzepte für eine Nische abzuwandeln, werden daher eine große Anzahl an Kompromisslösungen in Kauf genommen, die durch die Übernahme von Großserienteilen und - anlagen entstehen. Vor allem, wenn unterschiedliche Fahrzeuge, welche nur wenig voneinander differieren, geplant werden, werden diese aus einem Großserienmodul abgeleitet, so dass diese Nischenfahrzeuge immer an dessen Entstehungszeit und -planung gekoppelt sind. Ein rasches Reagieren auf Marktanforderungen ist daher nur mit Schwierigkeiten und relativ hohem Aufwand möglich. Auch ein in jüngerer Zeit vorgeschlagenes Chassis-Konzept mit einem Zentralträger und zusätzlichen seitlichen rohrförmigen Trägern (= EP-0 653 344 A1) erfordert eine Vielzahl von Anpassungsmaßnahmen, wenn unterschiedliche Fahrzeuge, die nur wenig voneinander differieren, gebaut werden sollen.

Aufgabe der Erfindung ist es, einen Fahrschemel für ein Kraftfahrzeug, insbesondere Personenkraftfahrzeug, zu schaffen, bei dem durch geringfügige Änderungen an wenigen Komponenten eine Vielzahl von unterschiedlichen Fahrzeugkonzepten verwirklicht werden kann. Auch soll der FahrzeugAufbau sicher und stabil am Fahrschemel befestigt werden können.

Diese Aufgabe wird an einem Fahrschemel nach dem Oberbegriff des Anspruchs 1 durch die im kennzeichnenden Teil des Anspruchs 1 angegebenen Merkmale gelöst. Vorteilhafte Aus- und Weiterbildungen sind Inhalt der Unteransprüche.

Es wird ein Baukasten geschaffen, der den Aufbau von Fahrschemeln ermöglicht, bei denen an dafür ausgelegten Koppelstellen eine Fahrgastzelle aufgenommen werden kann. Gepäckräume können sowohl in die Fahrgastzelle integriert sein als auch als eigene Gepäckraummodule am Fahrschemel befestigt werden. Der Fahrschemel besteht aus wenigen Modulen, die durch geringfügige Änderungen ihrer Konstruktionsparameter auf unterschiedliche Fahrzeugabmessungen und -gewichte angepasst werden können.

Das Frontmodul kann eine einfache aus Profilen aufgebaute Struktur aufweisen, welche Fahrwerkskomponenten aufnimmt und die Anbindung an das Koppelelement für das nächste Modul ermöglicht. Bei der Auslegung des Frontmoduls werden besondere Sicherheitsaspekte mitberücksichtigt. Das Modul kann aus Aluminium-Strangpreß-Profilen hergestellt sein oder einen Aufbau aus Faserverbundwerkstoffen aufweisen. An seinem vorderen Ende kann ein entsprechend angepasstes Stoßfängermodul befestigt sein.

Das vordere Koppelelement, welches zwischen dem Frontmodul und dem Zentralrohr vorgesehen ist, kann aus Aluminium- und/oder Magnesiumguß bestehen oder ein Faserverbundteil sein. Die beiden Koppelelemente besitzen Stützelement bzw. Anbindungsstellen zum Abstützen der Fahrgastzelle bzw. Karosserie. An den Koppelelementen stützen sich die bei einem Unfall auftretenden Kräfte und Momente ab. Ferner werden die vom Fahrwerk und Fahrgastzelle bzw. Karosserie während des Betriebes eingeleiteten Kräfte aufgenommen und auf die Einzelmodule des Fahrschemels verteilt.

Die beiden Koppelelemente sind über das Zentralrohr miteinander verbunden. Hierdurch erhält der Fahrschemel eine ausreichende Steifigkeit, die die Voraussetzung für eine gute Fahrdynamik schafft. Der Hohlraum des Zentralrohres kann an seiner Vorder- und Hinterseite zugänglich sein, so dass Kraftstoffbehälter und andere Komponenten in diesem Hohlraum untergebracht werden können. Das Zentralrohr kann als Strangpressprofil insbesondere aus Aluminium, als Stahlrollprofil oder als gewickeltes Faserverbundrohr ausgebildet sein.

Das Heckmodul kann aus einem Hilfsrahmen bestehen, welcher das Antriebsaggregat aufnimmt oder eine gemeinsame Schnittstelle für verschiedene Antriebsaggregate darstellt. An diesem Hilfsrahmen können ferner die hinteren Fahrwerkskomponenten aufgenommen werden und ein Stoßfängermodul befestigt sein.

Der Fahrschemel ist für unterschiedliche Fahrzeugkonzepte, insbesondere Nischenfahrzeuge geeignet.

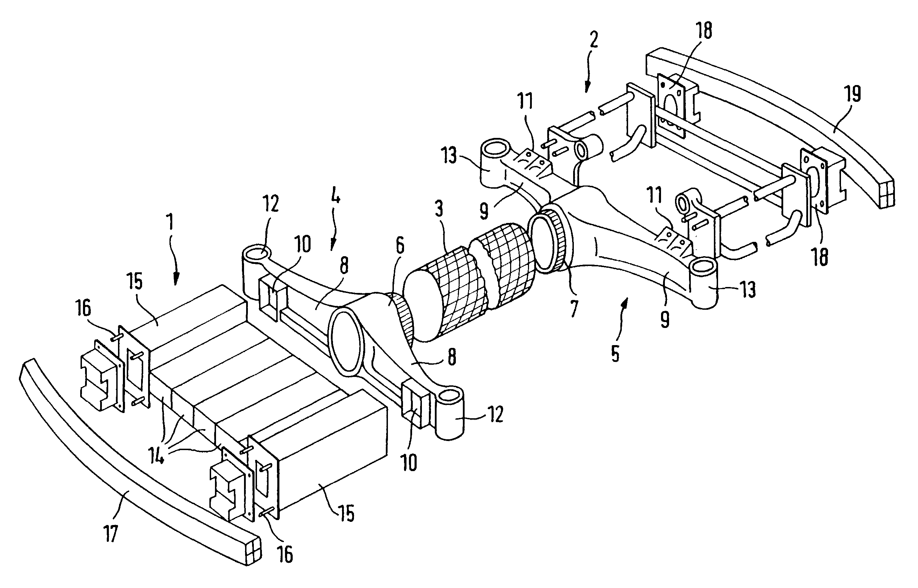

Anhand der Figur wird an einem Ausführungsbeispiel die Erfindung noch näher erläutert.

Die Figur zeigt in perspektivischer Explosivdarstellung die einzelnen Komponenten des Fahrschemels.

Das dargestellte Ausführungsbeispiel eines Fahrschemels für ein Personenkraftfahrzeug besitzt ein Frontmodul 1 und ein Heckmodul 2, welche über ein Zentralrohr 3 miteinander verbunden sind. Das vordere Ende des Zentralrohres 3 ist über ein vorderes Koppelelement 4 mit dem Frontmodul 1 und das hintere Ende des Zentralrohres 3 ist über ein hinteres Koppelelement 5 mit dem Heckmodul 2 verbunden.

Das vordere Koppelelement 4 besitzt eine mittig angeordnete Rohrverbindungsstelle 6, an welcher eine formschlüssige Verbindung mit dem Zentralrohr 3 hergestellt werden kann. Beidseits der mittigen Rohrverbindungsstelle 6 besitzt das vordere Koppelelement 4 sich im wesentlichen quer zur Fahrzeuglängsachse, entlang welcher sich das Zentralrohr 3 erstreckt, Träger 8. An den beiden äußeren Enden der Träger 8 sind Stützstellen 12 vorgesehen zum Abstützen einer nicht näher dargestellten Fahrgastzelle oder Karosserie. Ferner sind im Bereich der Enden Befestigungsmittel 10 vorgesehen zum festen Verbinden des Koppelelementes 4 mit dem Frontmodul 1.

Das Frontmodul 1 besitzt eine einfache aus Profilen aufgebaute Struktur. Diese erstrecken sich im wesentlichen parallel zur Fahrzeuglängsrichtung. Hierzu sind innenliegende Profile, insbesondere Strangpressprofile 14 und zwei außenliegende Profile 15 vorgesehen. Die Profile des Frontmoduls 1 können Fahrwerkkomponenten aufnehmen. Die Profile sind bevorzugt als Strangpressprofile, insbesondere aus Aluminium, hergestellt oder können aus Faserverbundwerkstoffen bestehen. An den vorderen Enden der beiden außenliegenden Profile 15 ist über geeignete Befestigungsmittel 16 ein Stoßfängermodul 17 befestigt. Bei der Auslegung der Profile des Frontmoduls 1 sind ferner Sicherheitsaspekte berücksichtigt.

Das hintere Ende des Zentralrohres 3 ist mit einer mittig vorgesehenen Rohrverbindungsstelle 7 des hinteren Koppelelementes 5 formschlüssig verbunden. Das hintere Koppelelement 5 besitzt ebenfalls zwei von der mittigen Rohrverbindungsstelle 7 quer zur Fahrzeuglängsrichtung sich erstreckende Träger 9. An den beiden Enden der Träger 9 befinden sich Stützelemente 13 für die nicht näher dargestellte Fahrgastzelle bzw. Karosserie. im Bereich der freien Ende der Träger 9 sind ferner Befestigungsmittel 11 vorgesehen zum Befestigen des Heckmoduls 2. Durch die Stützstellen 12, 13 am vorderen Koppelelement 4 und am hinteren Koppelelement 5 werden weit auslegende Angriffspunkte für die Fahrgastzelle am Fahrschemel geschaffen. In den beiden Koppelelementen werden die während des normalen Fahrbetriebes und auch die bei einem Unfall auftretenden Kräfte und Momente aufgenommen und auf die einzelnen Bestandteile des Fahrschemels verteilt. Durch das Zentralrohr 3, welches an seinen beiden Enden mit den Koppelelementen 4 und 5 formschlüssig verbunden ist, werden aufgrund der so erhaltenen Steifigkeitsverhältnisse gute Fahrdynamikvoraussetzungen gescharfen.

Das Heckmodul 2 kann aus einem Hilfsrahmen bestehen, welcher das Antriebsaggregat aufnehmen kann. Es kann auch eine gemeinsame Schnittstelle für mehrere unterschiedliche Antriebsaggregate vorhanden sein. Ferner können am Hilfsrahmen des Heckmoduls 2 die hinteren Fahrwerkskomponenten aufgenommen werden. Ferner ist über geeignete Befestigungsmittel 18 ein Stoßfängermodul 19 befestigt.

## Patentansprüche

1. Fahrschemel für ein Kraftfahrzeug mit einem Frontmodul (1) zur Aufnahme einer Fahrzeugvorderachse und einem Heckmodul (2) zur Aufnahme einer Fahrzeughinterachse, die über ein Zentralrohr (3) miteinander verbunden sind, dessen erstes Ende über ein vorderes Koppelelement (4) mit dem Frontmodul (1) und dessen zweites Ende über ein hinteres Koppelelement (5) mit dem Heckmodul (5) verbunden ist, wobei das jeweilige Koppelelement (4, 5) eine Rohrverbindungsstelle (6, 7), welche eine mittige Verbindung des Koppelelementes mit dem Zentralrohr (3) herstellt und zwei von der Rohrverbindungsstelle (6, 7) quer zur Fahrzeuglängsachse sich erstreckende Träger (8, 9) aufweist, an denen Befestigungsmittel (10, 11) zum festen Verbinden des Koppelelementes mit dem Frontmodul (1) bzw. dem Heckmodul (2) vorgesehen sind,
**dadurch gekennzeichnet, dass** an den Trägern (8, 9) der beiden Koppelelemente (4, 5) Stützelemente (12, 13) zum Abstützen der Fahrgastzelle bzw. -karosserie vorgesehen sind.

2. Fahrschemel nach Anspruch 1,
**dadurch gekennzeichnet, dass** die Befestigungsmittel (10, 11) und die Stützelemente (12, 13) im Bereich der freien Enden der Träger (8, 9) am jeweiligen Koppelelement (4, 5) vorgesehen sind.

3. Fahrschemel nach Anspruch 1 oder 2,
**dadurch gekennzeichnet, dass** das Frontmodul (1) im wesentlichen aus mehreren Profilen, insbesondere Strangpressprofilen (14, 15), Rollprofilen oder Faserverbundwerkstoffen, besteht.

4. Fahrschemel nach Anspruch 3,
**dadurch gekennzeichnet, dass** die Profile, insbesondere Strangpressprofile (14, 15), Rollprofile oder Faserverbundwerkstoffe, sich im wesentlichen parallel zur Fahrzeuglängsachse erstrecken.

5. Fahrschemel nach Anspruch 3 oder 4,
**dadurch gekennzeichnet, dass** an den vorderen Ende der beiden außenliegenden Profile (15) Befestigungsmittel (16) für ein Stoßfängermodul (17) vorgesehen sind.

6. Fahrschemel nach einem der Ansprüche 3 bis 5,
**dadurch gekennzeichnet, dass** an den beiden hinteren Enden der beiden außenliegenden Profile (15) Befestigungsstellen zum Befestigen der beiden Träger (8) des vorderen Koppelelementes (4) vorgesehen sind.

7. Fahrschemel nach einem der vorangegangenen Ansprüche,
**dadurch gekennzeichnet, dass** das Zentralrohr (3) mit seiner Achse im wesentlichen entlang der Fahrzeuglängsmittelachse verläuft.

## Claims

1. A suspension sub-frame for a motor vehicle with a front module (1) for the acceptance of the front axle of the vehicle and a rear module (2) for the acceptance of the rear axle of the vehicle, which are jointed together via a central tube (3), whose first end is jointed to the front module via a forward coupling element (4) and whose second end is jointed via a rear coupling element (5) to the rear module (5), whereby the individual coupling elements (4, 5) have a tube jointing position (6, 7), which provide a central joint of the coupling element with the front module (1) or with the rear module (2), **characterised in that** on the bearers (8, 9) of the two coupling elements (4, 5) supporting elements (12, 13) are provided to support the passenger cell and the bodywork.

2. A sub-frame according to Claim 1,
**characterised in that** the fastening means (10, 11) and the supporting elements (12, 13) are provided in the region of the free ends of the bearers (8, 9) of the individual coupling elements (4, 5).

3. A sub-frame according to Claim 1 or Claim 2,
**characterised in that** the front module (1) essentially comprises several profiles, especially extruded profiles (14, 15), rolled profiles or bonded fibre materials.

4. A sub-frame according to Claim 3,
**characterised in that** the profiles, especially extruded profiles (14, 15), rolled profiles or bonded fibre materials, extend essentially parallel to the longitudinal axis of the vehicle.

5. A sub-frame according to Claim 3 or Claim 4,
**characterised in that** fastening means (16) are provided on the forward ends of the two outer lying profiles (15) for the bumper module (17).

6. A sub-frame according to any of the Claims 3 to Claim 5,
**characterised in that** fastening positions are provided on the two rear ends of the two outer lying profiles (15) to fasten the two bearers (8) of the forward coupling element (4).

7. A sub-frame according to any of the preceding Claims,
**characterised in that** the axis of the central tube (3) runs essentially along the central longitudinal axis of the vehicle.

## Revendications

1. Faux châssis pour un véhicule automobile, dans lequel :
- un module avant (1) pour accueillir un train avant et un module arrière (2) pour accueillir un train arrière sont reliés par un tube central (3) dont une extrémité est reliée par un élément d'accouplement avant (4) au module avant (1), tandis que l'autre extrémité est reliée par un élément d'accouplement arrière (5) au module arrière (2),
- chaque élément d'accouplement (4, 5) présente une zone tubulaire de liaison (6, 7) qui réalise une liaison centrale de l'élément d'accouplement correspondant avec le tube central (3), ainsi que deux supports (8, 9) partant de la zone tubulaire de liaison (6, 7) transversalement à l'axe longitudinal du véhicule, des moyens de fixation (10, 11) étant prévus sur ces supports pour relier solidement l'élément d'accouplement au module avant (1) ou au module arrière (2),
**caractérisé en ce qu'**
il est prévu sur les supports (8, 9) des deux éléments d'accouplement (4, 5) des éléments d'appui (12, 13) pour soutenir la cellule de l'habitacle ou la carrosserie.

2. Faux châssis selon la revendication 1,
**caractérisé en ce que**
les moyens de fixation (10, 11) et les éléments d'appui (12, 13) se trouvent vers les extrémités libres des supports (8, 9) de chaque élément d'accouplement (4, 5).

3. Faux châssis selon l'une quelconque des revendications 1 ou 2,
**caractérisé en ce que**
le module avant (1) est composé essentiellement de plusieurs profilés, en particulier de profilés étirés à la presse (14, 15), de profilés roulés ou en composites fibreux.

4. Faux châssis selon la revendication 3,
**caractérisé en ce que**
les profilés, en particulier les profilés étirés à la presse (14, 15), les profilés roulés ou en composites fibreux sont essentiellement parallèles à l'axe longitudinal du véhicule.

5. Faux châssis selon l'une quelconque des revendications 3 ou 4,
**caractérisé en ce qu'**
il est prévu sur les extrémités avant des deux profilés (15) situés vers l'extérieur, des moyens de fixation (16) d'un module d'absorption de chocs (17).

6. Faux châssis selon l'une quelconque des revendications 3 à 5,
**caractérisé en ce qu'**
il est prévu sur les deux extrémités arrière des deux profilés (15) situés à l'extérieur, des zones de fixation pour fixer les deux supports (8) de l'élément d'accouplement avant (4).

7. Faux châssis selon l'une quelconque des revendications précédentes,
**caractérisé en ce que**
le tube central (3) a son axe placé essentiellement sur l'axe longitudinal médian du véhicule.
